# EUROPÄISCHE PATENTSCHRIFT

(11) **EP 1 100 692 B1**
(45) Veröffentlichungstag und Bekanntmachung des Hinweises auf die Patenterteilung: **24.11.2004**
(21) Anmeldenummer: 00941879.9
(22) Anmeldetag: 19.04.2000
(51) Int. Cl.: B60N 2/00

(54) **SCHALTUNGSANORDNUNG ZUR MESSWERTERFASSUNG EINER DRUCKSENSITIVEN WIDERSTANDSMATTE**
CIRCUIT CONFIGURATION FOR MEASURING THE RESISTANCES OF A PRESSURE-SENSITIVE RESISTOR MAT
CIRCUIT POUR DETERMINER LES RESISTANCES D'UN MAT RESISTIF SENSIBLE A LA PRESSION

(30) Priorität: 27.04.1999 DE 19919034
(43) Veröffentlichungstag der Anmeldung: 23.05.2001
(73) Patentinhaber: ROBERT BOSCH GMBH, 70442 Stuttgart (DE)
(72) Erfinder: NITSCHKE, Werner, D-71254 Ditzingen (DE); MAIER, Hermann, D-71706 Markgroeningen (DE)
(86) Internationale Anmeldenummer: PCT/DE2000/001225
(87) Internationale Veröffentlichungsnummer: WO 2000/064697

(56) Entgegenhaltungen:
- EP-A- 0 791 834
- EP-A- 0 895 091
- DE-A- 3 634 052
- DE-A- 3 634 053
- DE-A- 19 606 527
- DE-A- 19 727 193
- US-A- 4 336 522

## Beschreibung

### Stand der Technik

Die vorliegende Erfindung betrifft eine Schaltungsanordnung zur Meßwerterfassung einer in einem Fahrzeugsitz zur Sitzbelegungserkennung angeordneten drucksensitiven Widerstandsmatte, wobei zu der Widerstandsmatte ein erster Widerstand parallel geschaltet ist und ein Spannungsteiler vorhanden ist, an dem eine vom Widerstand der Widerstandsmatte abhängige Meßspannung abgreifbar ist.

Eine derartige Schaltungsanordnung ist aus der DE 197 27 193 Al bekannt. Über eine drucksensitive Widerstandsmatte in einem Fahrzeugsitz kann das Gewicht der den Fahrzeugsitz belegenden Person oder eines Kindersitzes oder eines anderen Gegenstandes ermittelt werden. Aus dieser Information leitet ein Steuergerät für Rückhaltemittel (z.B. Airbags) ab, ob im Falle eines Fahrzeugcrashes aufgrund der Sitzbelegung überhaupt eine Auslösung des Airbags erfolgen soll oder welche Aufblasstärke des Airbags zum Schutz der den jeweiligen Fahrzeugsitz belegenden Person günstig ist.

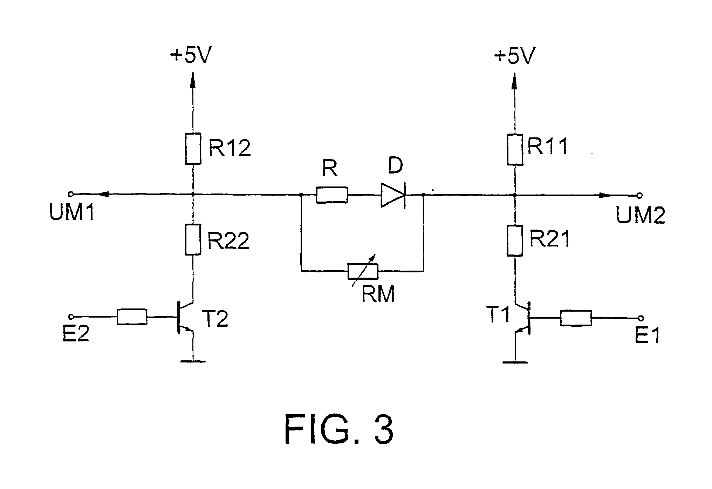

In der Figur 3 ist eine gemäß dem genannten Stand der Technik ausgeführte Schaltungsanordnung zur Erfassung der Meßwerte einer drucksensitiven Widerstandsmatte dargestellt. In der Schaltung stellt der Widerstand RM den druckabhängigen veränderbaren Widerstand der Widerstandsmatte dar. Dem Widerstand RM der Widerstandsmatte ist die Reihenschaltung aus einem Widerstand R und einer Diode D parallel geschaltet. An einem Ausgang dieser Parallelschaltung ist ein erster Transistor T1 mit einem an einer Versorgungsspannung von +5V anliegenden Spannungsteiler R11, R21 und an den anderen Ausgang der Parallelschaltung ein zweiter Transistor T22 mit einem an der Versorgungsspannung +5V anliegenden Spannungsteiler R12, R22 geschaltet.

Um die Widerstandsmatte daraufhin überprüfen zu können, ob eine fehlerhafte Unterbrechung vorliegt, wird der erste Transistor T1 an seinem Eingang E1 angesteuert, wobei aufgrund der Polung der Diode ein Strom ausschließlich durch die Widerstandsmatte RM fließt, und die dadurch entstehende Meßspannung UM1 am Spannungsteiler R11, R22 abgegriffen. Die Meßspannung UM1 wird nach einer Analog-Digital-Umsetzung von einem Steuergerät ausgewertet. Soll der aktuelle druckabhängige Widerstand RM der Widerstandsmatte gemessen werden, so wird der zweite Transistor T2 an seinem Eingang E2 angesteuert. In diesem Fall ist die Diode D im Durchlaßrichtung gepolt, und es fließt ein Strom über beide Zweige der Parallelschaltung RM, R, D. An dem Spannungsteiler R11, R21 wird eine Meßspannung UM2 abgegriffen, die nach einer Analog-Digital-Umsetzung in dem Steuergerät ausgewertet wird. Für die Auswertung wird die Meßspannung UM2 einer Schwellwertentscheidung unterzogen, aus der sich ergibt, ob der Fahrzeugsitz belegt ist oder nicht.

Bei der beschriebenen Schaltungsanordnung fließt für die Ermittlung der Meßspannung UM2 ein nur sehr geringer Strom (ca. 80 µA) durch die Widerstandsmatte. Dieser sehr niedrige Strom kann bei geringen Nebenschlüssen an der das Meßsignal führenden Leitung zu erheblichen Fehlmessungen führen. Ein Nebenschluß von z.B. 100 kΩ führt zu einer Abweichung der Meßspannung UM2 vom tatsächlichen Meßwert von 33%. Der Schaltungsaufwand der beschriebenen Schaltungsanordnung ist relativ hoch, da sie zwei Transistoren mit zwei Spannungsteilern benötigt.

Der Erfindung liegt daher die Aufgabe zugrunde, eine Schaltungsanordnung der eingangs genannten Art anzugeben, die auf fehlerhafte Nebenschlüsse auf der Meßsignalleitung mit möglichst geringen Meßsignalabweichungen reagiert und außerdem mit einer möglichst geringen Zahl an Bauelementen auskommt.

### Vorteile der Erfindung

Die genannte Aufgabe wird mit den Merkmalen des Anspruchs 1 dadurch gelöst, daß zu der Parallelschaltung aus der Widerstandsmatte und dem ersten Widerstand ein zweiter Widerstand in Reihe geschaltet ist, daß zu der Reihenschaltung ein steuerbarer Spannungsregler parallel geschaltet ist, dem eine vom Widerstand der Widerstandsmatte abhängige Steuerspannung zugeführt ist, und daß die Ausgangsspannung des Spannungsreglers an einem Spannungsteiler anliegt. Diese mit wenigen Widerständen und einem Spannungsregler auskommende Schaltungsanordnung wirkt wie ein Impedanzwandler, durch den der durch die Widerstandsmatte fließende Strom für die Signalauswertung erhöht wird und dadurch das Meßsignal unempfindlicher gegen Nebenschlüsse auf der Meßsignalleitung wird.

Vorteilhafte Weiterbildungen der Erfindung gehen aus den Unteransprüchen hervor. Danach wird die Steuerspannung für den Spannungsregler zwischen dem zweiten Widerstand und der Parallelschaltung aus der Widerstandsmatte und dem ersten Widerstand abgegriffen. Vorteilhafterweise wird ein temperaturkompensierter Spannungsregler verwendet.

### Zeichnung

Anhand eines in der Zeichnung dargestellten Ausführungsbeispiels wird nachfolgend die Erfindung näher erläutert. Es zeigen:
Figur 1 eine Schaltungsanordnung gemäß der Erfindung,
Figur 2 einen Meßspannungsverlauf in Abhängigkeit vom Widerstand der Widerstandsmatte und
Figur 3 eine Schaltungsanordnung gemäß dem Stand der Technik.

### Beschreibung eines Ausführungsbeispiels

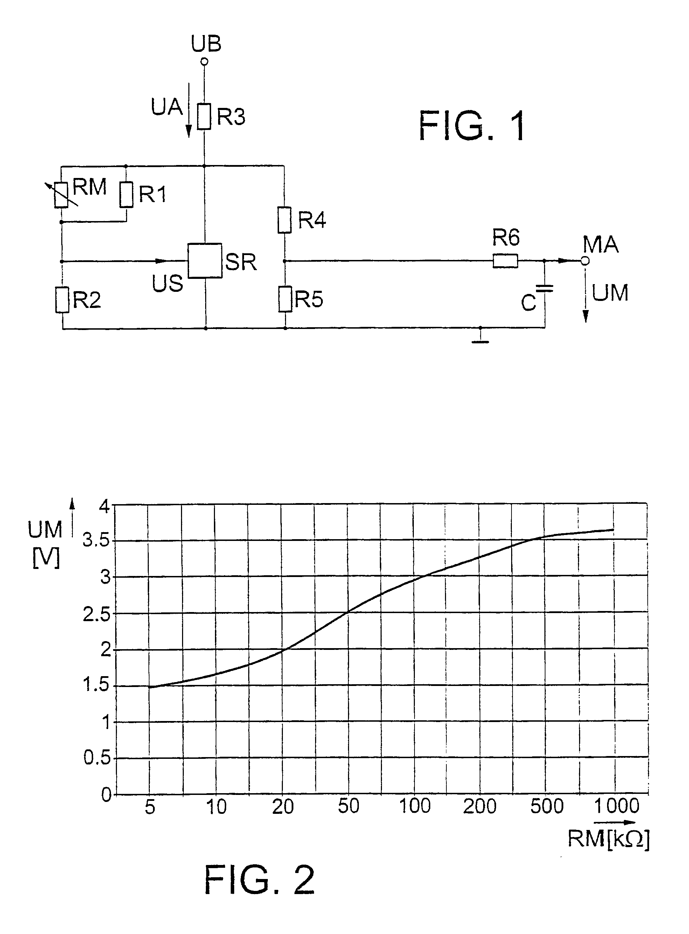

In der Figur 1 ist die Widerstandsmatte, deren Widerstand sich druckabhängig verändert, mit dem Widerstand RM gekennzeichnet. Dem Widerstand RM der Widerstandsmatte ist ein erster Widerstand R1 parallel geschaltet, und dieser Parallelschaltung ist ein zweiter Widerstand R2 in Reihe geschaltet. Zu der Reihenschaltung aus dem zweiten Widerstand R2 und den beiden Widerständen RM und R1 ist ein Spannungsregler SR, der vorzugsweise temperaturkompensiert ist, parallel geschaltet. Die Steuerspannung für den Spannungsregler SR wird zwischen dem zweiten Widerstand R2 und der Parallelschaltung aus der Widerstandsmatte RM und dem ersten Widerstand R1 abgegriffen. Der Spannungsregler SR sowie die diesem parallel geschaltete Reihenschaltung aus R2, R1, RM liegt mit einem Anschluß an Masse und mit dem anderen Anschluß an einer Versorgungsspannung UB, der Batteriespannung des Fahrzeugs. An einem zwischen der Versorgungsspannung UB und dem Spannungsregler SR angeschlossenen Widerstand R3 ist die stabilisierte Ausgangsspannung UA des Spannungsreglers SR abgreifbar. An diesen Widerstand R3 ist ein aus den Widerständen R4 und R5 bestehender Spannungsteiler angeschlossen. Diese beiden Widerstände R4 und R5 des Spannungsteilers sind zwischen Masse und dem Anschlußpunkt des Widerstandes R3 an den Spannungsregler SR in Reihe geschaltet. Zwischen den beiden Widerständen R4 und R5 des Spannungsteilers wird die Meßspannung UM gegenüber Masse abgegriffen.

Die an dem Ausgang MA der Schaltungsanordnung anliegende Meßspannung UM wird in bekannter Weise einem hier nicht dargestellten Analog-Digital-Umsetzer zugeführt und der digitale Meßwert anschließend in einer Steuereinrichtung ausgewertet. Der in der Meßleitung vor dem Ausgang MA eingefügte Widerstand R6 schützt den anschließenden Analog-Digital-Umsetzer gegen einen Kurzschluß der Meßleitung nach der Versorgungsspannung UB. Ein zwischen der Meßleitung und Masse eingefügter Kondensator C schützt den anschließenden Analog-Digital-Umsetzer gegen EMV-Einstrahlung und gegen Störspannungsspitzen von der Versorgungsspannung UB.

Die beiden Widerstände R1 und R2 sind so gewählt (z.B. R1 = 50 kΩ, R2 = 24 kΩ), daß sich bei einem Widerstand RM von 50 kΩ der Widerstandsmatte für den Spannungsregler SR eine Steuerspannung US von ca. 2,5 V einstellt. Der Spannungsregler SR regelt Schwankungen der Versorgungsspannung UB z.B. zwischen 8 und 18 V so aus, daß die vom Widerstand der Widerstandsmatte abhängige Ausgansspannung UA am Widerstand R3 unabhängig von Veränderungen der Versorgungsspannung UB bleibt. Durch eine niederohmige Auskopplung der Meßspannung UM über den Spannungsteiler R4 und R5 (z.B. R4 = R5 = 1 kΩ) würde ein Nebenschluß auf der Meßleitung von z.B. 100 kΩ nur eine Abweichung der Meßspannung UM vom tatsächlichen Meßwert nur etwa 0,5 % betragen.

In der Figur 2 ist der Verlauf der am Ausgang MA abgreifbaren Meßspannung UM in Abhängigkeit vom Widerstand RM der Widerstandsmatte dargestellt. Dieser Verlauf zeigt beispielsweise, daß die Meßspannung UM = 3,5 V beträgt, wenn die Widerstandsmatte einen Widerstand RM von 1 MΩ aufweist, was dann der Fall ist, wenn die Widerstandsmatte keiner Druckbelastung ausgesezt ist, der Fahrzeugsitz also nicht belegt ist. Je größer der Druck auf die Widerstandsmatte ist, desto geringer wird sein Widerstand RM, und dementsprechend nimmt gemäß dem dargestellten Verlauf die Meßspannung UM ab. Sollte der der Widerstandsmatte RM parallel geschaltete Widerstand R1 gebrochen sein, so steigt die Steuerspannung US für den Spannungsregler SR sehr stark an, was sich auch in einer sehr hohen Meßspannung UM am Ausgang MA niederschlägt und von der Steuereinheit eindeutig erkennbar ist.

In der Figur 3 ist die bereits in der Beschreibungseinleitung beschriebene, gemäß dem Stand der Technik ausgeführte Schaltungsanordnung zur Meßwerterfassung einer in einem Fahrzeugsitz angeordneten drucksensitiven Widerstandsmatte dargestellt. Im Vergleich mit dem Stand der Technik zeigt sich, daß die erfindungsgemäße Schaltung in Figur 1 mit erheblich weniger Bauteilen auskommt, die sich auf einfache Weise in einem Anschlußstecker an der Widerstandsmatte oder in der Widerstandsmatte selbst integrieren lassen. Die erfindungsgemäße Schaltungsanordnung weist auch weniger Meßsignalanschlüsse auf als die Schaltung gemäß dem Stand der Technik.

## Patentansprüche

1. Schaltungsanordnung zur Meßwerterfassung einer in einem Fahrzeugsitz zur Sitzbelegungserkennung angeordneten drucksensitiven Widerstandsmatte, wobei zu der Widerstandsmatte (RM) ein erster Widerstand (R1) parallel geschaltet ist und ein Spannungsteiler (R4, R5) vorhanden ist, an dem eine vom Widerstand (RM) der Widerstandsmatte abhängige Meßspannung (UM) abgreifbar ist, **dadurch gekennzeichnet, daß** zu der Parallelschaltung aus der Widerstandsmatte (RM) und dem ersten Widerstand (R1) ein zweiter Widerstand (R2) in Reihe geschaltet ist, daß zu der Reihenschaltung ein steuerbarer Spannungsregler (SR) parallel geschaltet ist, dem eine vom Widerstand (RM) der Widerstandsmatte abhängige Steuerspannung (US) zugeführt ist, und daß die Ausgangsspannung (UA) des Spannungsreglers (SR) an dem Spannungsteiler (R4, R5) anliegt.

2. Schaltungsanordnung nach Anspruch 1, **dadurch gekennzeichnet, daß** die Steuerspannung (US) für den Spannungsregler (SR) zwischen dem zweiten Widerstand (R2) und der Parallelschaltung aus der Widerstandsmatte (RM) und dem ersten Widerstand (R1) abgegriffen wird.

3. Schaltungsanordnung nach Anspruch 1, **dadurch gekennzeichnet, daß** der Spannungsregler (SR) temperaturkompensiert ist.

## Claims

1. Circuit arrangement for detecting the measured values of a pressure-sensitive resistance mat which is arranged in a vehicle seat and is intended for identifying seat occupancy, with a first resistor (R1) being connected in parallel with the resistance mat (RM) and there being a voltage divider (R4, R5) from which a measurement voltage (UM) which is dependent on the resistance (RM) of the resistance mat can be tapped off, **characterized in that** a second resistor (R2) is connected in series with the parallel circuit formed from the resistance mat (RM) and the first resistor (R1), **in that** a controllable voltage regulator (SR), which is supplied with a control voltage (US) which is dependent on the resistance (RM) of the resistance mat, is connected in parallel with the series circuit, and **in that** the output voltage (UA) of the voltage regulator (SR) is applied to the voltage divider (R4, R5).

2. Circuit arrangement according to Claim 1, **characterized in that** the control voltage (US) for the voltage regulator (SR) is tapped off between the second resistor (R2) and the parallel circuit formed from the resistance mat (RM) and the first resistor (R1).

3. Circuit arrangement according to Claim 1, **characterized in that** the voltage regulator (SR) is temperature-compensated.

## Revendications

1. Circuit pour enregistrer des valeurs de mesure d'une natte résistive sensible à la pression disposée dans un siège de véhicule pour détecter l'occupation d'un siège, avec une première résistance (R1) montée en parallèle à la natte résistive (RM) et un diviseur de tension (R4, R5) prévu pour y prélever une tension de mesure (UM) en fonction de la résistance (RM) de la natte résistive,
**caractérisé en ce que**
par rapport au circuit parallèle comprenant la natte résistive (RM) et la première résistance (R1) une deuxième résistance (R2) est montée en série, un régulateur de tension (SR) commandable est monté en parallèle du circuit série, et reçoit une tension de commande (US) en fonction de la résistance (RM) de la natte résistive, et la tension de sortie (UA) du régulateur de tension (SR) est appliquée au diviseur de tension (R4, R5).

2. Circuit selon la revendication 1,
**caractérisé en ce que**
la tension de commande (US) pour le régulateur de tension (SR) est prélevée entre la deuxième résistance (R2) et le circuit parallèle comprenant la natte résistive (RM) et la première résistance (R1).

3. Circuit selon la revendication 1,
**caractérisé en ce que**
le régulateur de tension (SR) est compensé en température.
